# EUROPÄISCHE PATENTSCHRIFT

(11) **EP 0 962 687 B1**
(45) Veröffentlichungstag und Bekanntmachung des Hinweises auf die Patenterteilung: **27.07.2005**
(21) Anmeldenummer: 99110392.0
(22) Anmeldetag: 28.05.1999
(51) Int. Cl.: F16L 21/00, F16L 9/08

(54) **Betonrohr**
Concrete pipe
Tuyau en béton

(30) Priorität: 30.05.1998 DE 29809806 U
(43) Veröffentlichungstag der Anmeldung: 08.12.1999
(73) Patentinhaber: Züblin Schleuderbetonrohrwerke GmbH, 77694 Kehl (DE)
(72) Erfinder: Büchele, Rudolf Dipl-Ing., 77966 Kappel-Grafenhausen (DE)
(74) Vertreter: Wasmuth, Rolf, Dipl.-Ing.

(56) Entgegenhaltungen:
- FR-E- 61 645
- GB-A- 796 680
- US-A- 2 307 685

## Beschreibung

Die Erfindung betrifft ein Betonrohr nach dem Oberbegriff des Anspruchs 1.

Derartige Betonrohre werden im Erdreich eingebaut, z.B. durch offene Gräben oder durch Vorpressen. Sie dienen der Abwasserführung, Luftführung, der Aufnahme von Versorgungsleitungen und dgl., und sind z.B. aus GB 796 680 A bekannt.

Die Betonrohre bestehen regelmäßig aus bewehrtem Stahlbeton und werden maschinell, teilweise sogar automatisch hergestellt. Dabei sind verfahrensbedingt feste Baulängen gegeben, z.B. axiale Längen von drei Metern.

Beim Einbau der Betonrohre sind oft Längenausgleichsstücke in einer Strecke vorzunehmen, z.B. im Anschlußbereich von Schächten, Abzweigen oder dgl.. Diese Längenausgleichsrohre können maschinell nicht wirtschaftlich hergestellt werden.

Der Erfindung liegt die Aufgabe zugrunde, vorzugsweise maschinell hergestellte Betonrohre in variablen Längen zur Verfügung zu stellen.

Die Aufgabe wird erfindungsgemäß durch die kennzeichnenden Merkmale des Anspruchs 1 gelöst.

Ein Längenausgleichsrohr wird danach aus mindestens zwei axialen Teilabschnitten zusammengesetzt, die an ihrer Stoßfläche unlösbar miteinander verbunden, vorzugsweise miteinander verklebt sind. Auf diese Weise können Rohre fester Baulänge von z.B. zwei Meter maschinell hergestellt werden, wobei dann zur Erzielung der notwendigen axialen Länge ein zweiter Teilabschnitt an diesen ersten Teilabschnitt angefügt, insbesondere angeklebt wird.

Aus Teilabschnitten unterschiedlicher Länge lassen sich so Längenausgleichsrohre beliebiger Länge zusammensetzen, so daß trotz maschineller Fertigung kürzerer Einzelrohre ein großer Längenbereich für zusammengesetzte Längenausgleichsrohre abgedeckt werden kann.

Als Verbindung der Teilabschnitte des Betonrohrs hat sich ein Mehrkomponentenkleber, insbesondere ein Epoxyd-, Polyesterharz- oder Acrylatkleber als vorteilhaft erwiesen; zweckmäßig kann eine Epoxydharz-Klebedichtung eingesetzt werden, wodurch beim Zusammenfügen gleichzeitig eine dauerhaft dichte Verbindung geschaffen ist.

Ein Teilabschnitt kann durch das Spitzende allein oder durch die Muffe allein gebildet sein, wobei Teillängen des Grundkörpers axial an das Spitzende bzw. die Muffe angefügt sein können. Die Teilabschnitte können unbewehrt sein und zweckmäßig aus Polyesterbeton, Epoxydharzbeton bestehen.

In einer einfachen Ausführungsform sind die Teilabschnitte aus einem gleichen Material bzw. einer gleichen Materialzusammensetzung gefertigt, so z.B. aus bewehrtem Stahlbeton.

Die Erfindung ist bei einer Vielzahl gängiger Rohrquerschnitte bzw. -profile realisierbar, beispielsweise sind hier neben einem zylindrischen Querschnitt auch Eiprofile, Maulprofile, Drachenprofile, Rinnenprofile, Rechteckquerschnitte und Rohre mit Fuß zu nennen.

Weitere Merkmale der Erfindung ergeben sich aus den weiteren Ansprüchen, der Beschreibung und der Zeichnung, in der nachfolgend im einzelnen beschriebene Ausführungsbeispiele der Erfindung dargestellt sind. Es zeigen:
- Fig. 1: einen axialen Teilschnitt durch ein zusammengesetztes Stahlbetonrohr mit erweiterter Anschlußmuffe,
- Fig. 2: einen axialen Teilschnitt durch ein Stahlbetonrohr mit im Durchmesser verringertem Spitzende,
- Fig. 3: einen axialen Teilschnitt durch ein zusammengesetztes Stahlbetonrohr mit etwa konstantem Außendurchmesser,
- Fig. 4: einen axialen Teilschnitt durch ein zusammengesetztes Betonrohr mit einem im Durchmesser erweiterten Muffenteil,
- Fig. 5: einen axialen Teilschnitt durch ein Betonrohr gemäß Fig. 4 in anderer Ausführung,
- Fig. 6: einen axialen Teilschnitt durch ein Betonrohr mit angesetztem Spitzende aus Polyesterbeton,
- Fig. 7: einen axialen Teilschnitt durch ein Betonrohr mit einer angesetzten Muffe aus Polyesterbeton.

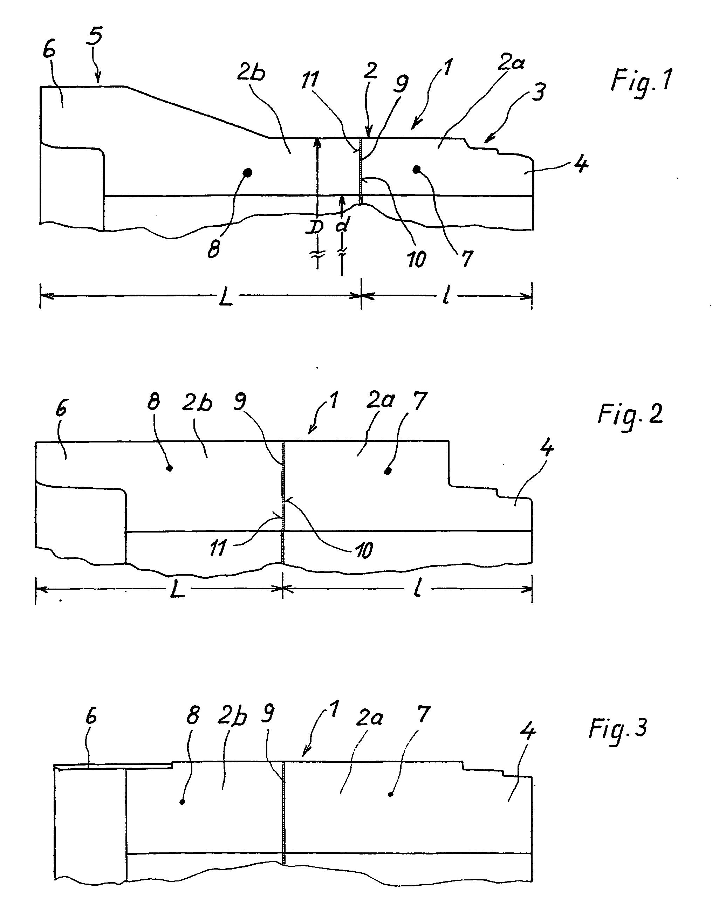

Das in Fig. 1 dargestellte Betonrohr 1 hat eine zur axialen Achse rotationssymmetrische Gestalt und besteht im wesentlichen aus einem zylindrischen Grundkörper 2, an dessen einem Ende 3 ein Spitzende 4 und an dessen anderem Ende 5 eine Muffe 6 zur jeweiligen axialen Verbindung mit einem nicht dargestellten benachbarten Anschlußrohr vorgesehen ist. Wie Fig. 1 zeigt, ist das Betonrohr aus mindestens zwei axialen Teilabschnitten 7, 8 zusammengesetzt, die an ihrer Stoßfläche 9 unlösbar miteinander verbunden sind. Im Ausführungsbeispiel nach Fig. 1 bestehen die Teilabschnitte 7 und 8 aus bewehrtem Stahlbeton, wobei die einander zugewandten ringförmigen Stirnflächen 10 und 11 vollflächig aneinander anliegen. Die Teilabschnitte 7 und 8 haben an ihrer Stoßfläche 9 gleiche Außen- und Innendurchmesser D und d.

Die Teilabschnitte 7 und 8 liegen mit ihren Stirnflächen 10 und 11 deckungsgleich aufeinander, wobei an der Stoßfläche 9 die Teilabschnitte 7 und 8 miteinander verklebt sind, wozu zweckmäßig ein Mehrkomponentenkleber, insbesondere ein Epoxydharzkleber verwendet ist.

Die Teilabschnitte 7 und 8 haben unterschiedliche Länge L und l; die Längen sind variabel und dienen der Zusammensetzung von Betonrohren 1 unterschiedlicher Länge. So können im Werk die erforderlichen axialen Längen L plus l des Betonrohrs 2 entsprechend den Anforderungen vor Ort zusammengesetzt und unlösbar fest miteinander verbunden werden.

Während in Fig. 1 die Teilabschnitte 7 und 8 unterschiedliche Längen aufweisen, sind in Fig. 2 die Teilabschnitte 7 und 8 gleich lang ausgebildet. An der Stoßstelle 9 liegen die einander zugewandten ringförmigen Stirnflächen 10 und 11 der Teilabschnitte 7 und 8 deckungsgleich aneinander an und sind unlösbar fest miteinander verbunden, insbesondere miteinander verklebt.

In den Ausführungsbeispielen 1 und 2 schließt an das Spitzende 4 bzw. die Muffe 6 axial ein Grundkörperabschnitt 2a, 2b vorgegebener axialer Länge an, wobei die Stoßfläche am Grundkörperabschnitt 2a bzw. 2b ausgebildet ist. In Fig. 1 ist die Muffe 6 gegenüber dem Grundkörperabschnitt 2b erweitert ausgeführt; das Spitzende 4 des Teilabschnittes 7 ist gegenüber dem Grundkörper 2a im Außendurchmesser im wesentlichen unverändert. Im Ausführungsbeispiel nach Fig. 2 ist das Spitzende 4 gegenüber dem Grundkörperabschnitt 2a im Außendurchmesser deutlich kleiner ausgeführt; hingegen ist die Muffe 6 des Teilabschnittes 8 mit gleichem Außendurchmesser ausgeführt wie sein Grundkörperabschnitt 2b.

Im Ausführungsbeispiel nach Fig. 3 haben die Teilabschnitte wiederum unterschiedliche Länge und sind im Außendurchmesser mit weitgehend gleichem Maß ausgeführt. Die Muffe 6 des Teilabschnittes 8 wird im Ausführungsbeispiel nach Fig. 3 durch einen Stahlring gebildet, der im Grundkörperabschnitt 2b eingelassen und vorzugsweise an dessen Bewehrung angeschlossen ist. In den Ausführungsbeispielen nach den Fig. 1 bis 3 sind die jeweils zusammengesetzten beiden Teilabschnitte aus bewehrtem Stahlbeton gefertigt; es kann zweckmäßig sein, das Betonrohr 1 aus mehr als zwei Teilabschnitten zusammenzufügen.

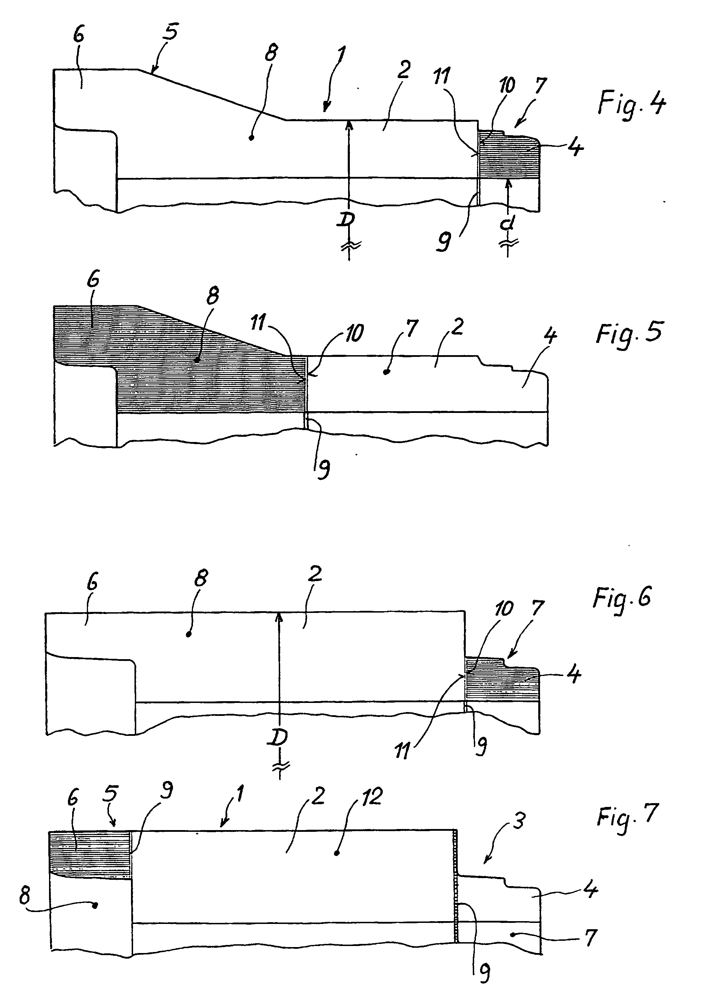

Im Ausführungsbeispiel nach Fig. 4 bildet das Spitzende 4 einen selbständigen Teilabschnitt 7 des Betonrohres 1, dessen anderer Teilabschnitt 8 an dem dem Spitzende 4 abgewandten Ende 5 die Muffe 6 aufweist. Der Teilabschnitt 8 weist ferner den einteilig an die Muffe 6 anschließenden zylindrischen Grundkörper 2 auf, dessen dem Spitzende 4 zugewandte Stirnfläche 10 einen größeren Außendurchmesser D aufweist als die zugewandte Stirnfläche 11 des Spitzendes 4. Die Innendurchmesser d von Spitzende 4 und Grundkörper 2 sind hingegen identisch.

Der Teilabschnitt 8 in Fig. 4 besteht bevorzugt aus bewehrtem Stahlbeton, während der das Spitzende 4 bildende Teilabschnitt 7 unbewehrt ist und aus Polyesterbeton, Epoxydharzbeton oder ähnlichen Materialien bestehen kann. Das Betonrohr 1 nach Fig. 4 besteht somit aus einem bewehrten Teilabschnitt 8 und einem unbewehrten Teilabschnitt 7, wobei die Teilabschnitte aus unterschiedlichen Materialien bestehen.

Im Ausführungsbeispiel nach Fig. 5 besteht der eine Teilabschnitt 7 aus bewehrtem Stahlbeton und umfaßt das Spitzende 4 und den Grundkörper 2. An der Stoßfläche 9 liegen die Stirnflächen 10 und 11 der Teilabschnitte 7 und 8 deckungsgleich aufeinander und sind unlösbar miteinander verklebt, bevorzugt durch einen Mehrkomponentenkleber, Epoxydharzkleber oder dgl.. Der Teilabschnitt 7 besteht in Fig. 5 aus einem bewehrten Stahlbeton, der Teilabschnitt 8 besteht aus einem Polyesterbeton, Epoxydharzbeton.

Das Ausführungsbeispiel nach Fig. 6 zeigt einen bewehrten Stahlbetonteilabschnitt 8, dessen Grundkörper 2 und die einteilig angeformte Muffe 6 einen gleichen Außendurchmesser D zeigen. Der das Spitzende 4 bildende Teilabschnitt 7 besteht wiederum aus einem unbewehrten Material, z.B. Polyesterbeton, Epoxydharzbeton. Die Stirnfläche 11 des Teilabschnitts 7 liegt auf einem inneren Teilring der Stirnfläche 10 des anderen Teilabschnittes 8 an und ist im Bereich der Stoßstelle 9 mit dem anderen Teilabschnitt verklebt.

In Fig. 7 bildet der zylindrische Grundkörper 2 einen dritten Teilabschnitt 12, an dessen Enden 3 und 5 als Muffe 6 ein Teilabschnitt 8 und als Spitzende 4 ein Teilabschnitt 7 an der jeweiligen Stoßstelle 9 angeklebt ist. Das Betonrohr 1 in Fig. 7 hat somit an beiden Enden einen angeklebten Teilabschnitt 7, 8, die jeweils Endabschnitte des Grundkörpers 2 bzw. des mittleren Teilabschnittes 12 bilden. Im Ausführungsbeispiel nach Fig. 7 sind die Teilabschnitte 7 und 8 aus Polyesterbeton, Epoxydharzbeton gebildet, während der Grundkörper 2 bzw. der Teilabschnitt 12 aus bewehrtem Stahlbeton gefertigt ist.

## Patentansprüche

1. Betonrohr, umfassend einen im wesentlichen zylindrischen oder andere geeignete Querschnittsformen aufweisenden Grundkörper (2), an dessen einem Ende (5) eine Muffe (6) und an dessen anderem Ende (3) ein Spitzende (4) zur jeweiligen axialen Verbindung mit einem benachbarten Anschlußrohr vorgesehen ist,
**dadurch gekennzeichnet, daß** zur Bildung des Betonrohres (1) mindestens zwei axiale Teilabschnitte (7, 8) aus Beton zusammengesetzt sind, die an ihrer Stoßfläche (9) unlösbar miteinander verbunden sind, wobei der eine Teilabschnitt (7) mit dem Spitzende (4) und der andere Teilabschnitt (8) mit der Muffe (6) einteilig ausgeformt ist.

2. Betonrohr nach Anspruch 1,
**dadurch gekennzeichnet, daß** die Teilabschnitte (7, 8) miteinander verklebt sind.

3. Betonrohr nach Anspruch 2,
**dadurch gekennzeichnet, daß** der Klebstoff ein Mehrkomponentenkleber, insbesondere ein Epoxydharzkleber ist.

4. Betonrohr nach einem der Ansprüche 1 bis 3,
**dadurch gekennzeichnet, daß** die Teilabschnitte (7, 8) unterschiedliche axiale Länge (L, l) haben.

5. Betonrohr nach einem der Ansprüche 1 bis 4,
**dadurch gekennzeichnet, daß** ein Teilabschnitt (7) das Spitzende (4) ist.

6. Betonrohr nach einem der Ansprüche 1 bis 5,
**dadurch gekennzeichnet, daß** ein Teilabschnitt (8) die Muffe (6) ist.

7. Betonrohr nach einem der Ansprüche 1 bis 6,
**dadurch gekennzeichnet, daß** der Teilabschnitt (7, 8) einen Abschnitt (2a, 2b) des Grundkörpers (2) umfaßt.

8. Betonrohr nach einem der Ansprüche 1 bis 7,
**dadurch gekennzeichnet, daß** der Teilabschnitt (7, 8) unbewehrt ist.

9. Betonrohr nach einem der Ansprüche 1 bis 8,
**dadurch gekennzeichnet, daß** der Teilabschnitt (7, 8) aus Polyesterbeton oder Epoxydharzbeton besteht.

10. Betonrohr nach einem der Ansprüche 1 bis 8,
**dadurch gekennzeichnet, daß** der Teilabschnitt (7, 8) aus bewehrtem Stahlbeton gefertigt ist.

11. Betonrohr nach einem der Ansprüche 1 bis 10,
**dadurch gekennzeichnet, daß** die Teilabschnitte aus einem gleichen Material bzw. einer gleichen Materialzusammensetzung bestehen.

12. Betonrohr nach einem der Ansprüche 1 bis 11,
**dadurch gekennzeichnet, daß** der eine Teilabschnitt (7, 8) bewehrt, der andere Teilabschnitt (7, 8) unbewehrt ist.

## Claims

1. Concrete pipe comprising a base body (2) which is essentially cylindrical or has other suitable cross-sectional shapes, one end (5) of which is provided with a socket (6) and the other end (3) of which is provided with a spigot end (4) for axial connection to adjoining pipes,
**characterised in that**, to produce the concrete pipe (1), at least two axial concrete sections (7, 8) are assembled and permanently joined at their butt joint face (9), one section (7) being produced integral with the spigot end (4) and the other section (8) being produced integral with the socket (6).

2. Concrete pipe according to claim 1,
**characterised in that** the sections (7, 8) are bonded to one another.

3. Concrete pipe according to claim 2,
**characterised in that** the adhesive used is a multi-component adhesive, in particular an epoxy resin adhesive.

4. Concrete pipe according to any of claims 1 to 3,
**characterised in that** the sections (7, 8) have different axial lengths (L, l).

5. Concrete pipe according to any of claims 1 to 4,
**characterised in that** one section (7) is the spigot end (4).

6. Concrete pipe according to any of claims 1 to 5,
**characterised in that** one section (8) is the socket (6).

7. Concrete pipe according to any of claims 1 to 6,
**characterised in that** the section (7, 8) includes a section (2a, 2b) of the base body (2).

8. Concrete pipe according to any of claims 1 to 7,
**characterised in that** the section (7, 8) is not reinforced.

9. Concrete pipe according to any of claims 1 to 8,
**characterised in that** the section (7, 8) is made of polyester concrete or epoxy resin concrete.

10. Concrete pipe according to any of claims 1 to 8,
**characterised in that** the section (7, 8) is made of reinforced concrete.

11. Concrete pipe according to any of claims 1 to 10,
**characterised in that** the sections are made of an identical material or material composition.

12. Concrete pipe according to any of claims 1 to 11,
**characterised in that** one section (7, 8) is reinforced while the other section (7, 8) is not reinforced.

## Revendications

1. Tuyau en béton, comprenant un corps de base (2) sensiblement cylindrique ou présentant d'autres formes de section appropriées, sur une extrémité (5) duquel est prévu un manchon (6) et sur l'autre extrémité (3) duquel est prévue une extrémité pointue (4) pour la liaison axiale respective avec un tuyau de raccordement voisin,
**caractérisé en ce que**, pour former le tuyau en béton (1), au moins deux tronçons partiels axiaux (7, 8) en béton sont assemblés, lesquels sont reliés entre eux de façon indétachable sur leur face de jonction (9), un tronçon partiel (7) et l'autre tronçon partiel (8) étant formés d'une seule pièce respectivement avec l'extrémité pointue (4) et avec le manchon (6).

2. Tuyau en béton selon la revendication 1,
**caractérisé en ce que** les tronçons partiels (7, 8) sont collés l'un avec l'autre.

3. Tuyau en béton selon la revendication 2,
**caractérisé en ce que** la colle est une colle à plusieurs composants, en particulier une colle à résine époxy.

4. Tuyau en béton selon l'une quelconque des revendications 1 à 3
**caractérisé en ce que** les tronçons partiels (7, 8) ont une longueur (L, l) axiale différente.

5. Tuyau en béton selon l'une quelconque des revendications 1 à 4,
**caractérisé en ce qu'**un tronçon partiel (7) est l'extrémité pointue (4).

6. Tuyau en béton selon l'une quelconque des revendications 1 à 5,
**caractérisé en ce qu'**un tronçon partiel (8) est le manchon (6).

7. Tuyau en béton selon l'une quelconque des revendications 1 à 6,
**caractérisé en ce que** le tronçon partiel (7, 8) comprend une partie (2a, 2b) du corps de base (2).

8. Tuyau en béton selon l'une quelconque des revendications 1 à 7,
**caractérisé en ce que** le tronçon partiel (7, 8) n'est pas armé.

9. Tuyau en béton selon l'une quelconque des revendications 1 à 8,
**caractérisé en ce que** le tronçon partiel (7, 8) est à base de béton au polyester ou de béton à la résine époxy.

10. Tuyau en béton selon l'une quelconque des revendications 1 à 8,
**caractérisé en ce que** le tronçon partiel (7, 8) est fabriqué à base de béton armé.

11. Tuyau en béton selon l'une quelconque des revendications 1 à 10,
**caractérisé en ce que** les tronçons partiels sont à base d'un matériau identique ou d'une composition de matériau identique.

12. Tuyau en béton selon l'une quelconque des revendications 1 à 11,
**caractérisé en ce qu'**un tronçon partiel (7, 8) est armé et l'autre tronçon partiel (7, 8) n'est pas armé.
